# EUROPÄISCHE PATENTSCHRIFT

(11) **EP 1 180 674 B1**
(45) Veröffentlichungstag und Bekanntmachung des Hinweises auf die Patenterteilung: **22.02.2006**
(21) Anmeldenummer: 01117604.7
(22) Anmeldetag: 23.07.2001
(51) Int. Cl.: G01M 17/007

(54) **Datenkommunikationssystem für Kraftfahrzeug Prüfstände mit Prüfprogramm auf der Zentraleinheit**
Data communication system for automobile test benches with test program on the central unit
Système de communication de données pour bancs d'essai d'automobiles avec le programme de test sur l'unité centrale

(30) Priorität: 09.08.2000 DE 10038930
(43) Veröffentlichungstag der Anmeldung: 20.02.2002
(73) Patentinhaber: MAHA Maschinenbau Haldenwang GmbH & Co. KG, 87490 Haldenwang (DE)
(72) Erfinder: Knestel, Anton, 87496 Hopferbach (DE); Hank, Jürgen, 86899 Landsberg (DE)
(74) Vertreter: Beetz & Partner

(56) Entgegenhaltungen:
- EP-A- 0 306 362
- EP-A- 0 709 755
- EP-A- 0 793 086
- EP-B- 0 894 255
- WO-A-99/23783
- DE-A- 19 859 005

## Beschreibung

Die vorliegende Erfindung betrifft ein Datenkommunikationssystem für Prüfstände von Kraftfahrzeugen und ein entsprechendes Verfahren.

Insbesondere ist ein Datenkonimunikationssystem gezeigt, das eine Messeinrichtung zur Messdatenerfassung aufweist, weiterhin eine Zentraleinheit, die die von der Messeinrichtung erfassten Daten erhält und verarbeitet und eine mobile Bedieneinrichtung, die in einer Datenübertragungsverbindung mit der Zentraleinheit steht. Nachdem die von der Messeinrichtung erfassten Messdaten auf der Zentraleinheit verarbeitet wurden, werden die entsprechenden Daten zu einer mobilen Bedieneinrichtung übertragen. Nachdem die erfassten Messdaten an der Bedieneinrichtung durch die Datenübertragungsverbindung übertragen wurden, kann eine Bedienperson die Bedieneinrichtung in Abhängigkeit der Messdaten betätigen. Insbesondere findet die Erfindung bei Prüfständen für Kraftfahrzeuge Anwendung.

Aus der DE 196 15 008 A1 ist eine Vorrichtung zum Steuern eines Prüfstrassensystems für Kraftfahrzeuge bekannt. Bei derartigen Vorrichtungen können Kraftfahrzeuge, beispielsweise am Bandende einer Kraftfahrzeugproduktion, überprüft werden. Hierbei läuft auf einer Zentraleinheit, auf der ein Prüfprogramm gespeichert ist, dieses Prüfprogramm ab, und ein Prüfer überprüft mit Hilfe des Prüfprogramms mehrere Funktionen des Autos. Ein weiteres Anwendungsgebiet derartiger Prüfstände ist beispielsweise die Überprüfung eines Kraftfahrzeugs beim TÜV. Bei einem derartigen Prüfstand kann sich nun ergeben, dass der Prüfer das Fahrzeug untersucht und hierbei Mängel feststellt. Diese Mängel werden in das jeweilige Prüfprogramm eingegeben, wobei die Bedienstationen üblicherweise am Rande neben der Prüfstraße aufgebaut sind. Sollte das Fahrzeug sehr viele Mängel aufweisen, muss sich der Prüfer diese Mängel merken oder öfters zwischen dem Fahrzeug und dem Bedienstationen hin- und herpendeln. Oftmals muss auch in einer Grube unter dem Fahrzeug gearbeitet werden, so dass die vom Prüfer zurückzulegenden Wege unter Umständen beträchtlich sein können. Eine weitere Schwierigkeit ergibt sich bei der Überprüfung von Lkws. Die für die Anzeige des Prüfprogramms vorhandenen Anzeigeelemente sind während der Prüfung gar nicht oder nur sehr schwer einsehbar. Auch wenn mehrere Anzeigeelemente über den Prüfstand verteilt werden, ist es für den Prüfer nicht immer möglich, diese zu erkennen, so dass der Prüfer direkt am Fahrzeug nicht mit den notwendigen Informationen versorgt wird. Diese Information kann beispielsweise eine Bedienerführung sein, wie beispielsweise: "Bitte jetzt in den Prüfstand einfahren", "Bitte jetzt bremsen", oder es kann sich um die Darstellung aktueller Messwerte handeln.

Die Kommunikation zwischen dem Prüfer, dem Anzeigeelement und der Eingabeeinheit ist somit bei vorhandenen Prüfsystemen aufwendig. Die Überprüfung eines Fahrzeugs mit nur einem Prüfer ist kompliziert, da er zwischen dem zu überprüfenden Fahrzeug und der Bedieneinrichtung des Prüfstands hin- und herpendeln muss. Das Datenkommunikationssystem zwischen der Zentraleinheit, auf der das Messprogramm gespeichert ist und der Bedieneinheit und der Anzeigeeinrichtung ist kompliziert, was den Prüfungsablauf langwierig und damit teuer macht.

Die von der Prüfungsstelle genannte Druckschrift EP 0 894 255 B1 (entsprechend DE-A1-196 15 008) betrifft eine Vorrichtung zum Steuern eines zumindest eine Prüfgasse aufweisenden Prüfsystems für Kraftfahrzeuge. Hierzu ist ein Server vorgesehen, der über ein Lokalnetz (LAN) mit mehreren Arbeitsstationen verbunden ist. Die Arbeitsstationen sind wiederum über einen Feldbus mit Steuermodulen verbunden, die die jeweiligen Prüfstationen steuern. Die Arbeitsstationen weisen entsprechende Eingabe- und Ausgabegeräte auf. Ein Eingabegerät in diesem Zusammenhang kann eine Tastatur sein und ein Ausgabegerät kann beispielsweise ein Monitor sein. Zur Prüfung eines Fahrzeugs wird der im Server erzeugte Prüfdatensatz und alle zur Prüfung notwendigen Daten in den Speicher der Arbeitsstation geladen. Die zur Prüfung notwendigen Daten enthalten insbesondere den Prüfdatensatz, der nun während der Prüfung mit Prüfdaten gefüllt wird. Die Prüfdaten werden von der Prüfstation über die zugeordneten Steuermodule zur Arbeitsstation übertragen.

Aufgabe der vorliegenden Erfindung ist die Bereitstellung eines Datenkommunikationssystems, mit dem die Durchführung einer Prüfung auf einfache Weise zeit- und damit kostensparend möglich ist.

Diese Aufgabe kann nach den Ansprüchen 1,19 gelöst werden. Ein Datenkommunikationssystem weist zumindest eine Messeinrichtung zur Erfassung von Messdaten auf. Das Datenkommunikationssystem kann weiterhin eine Zentraleinheit aufweisen, die die von der Messeinrichtung erfassten Daten empfängt und verarbeitet. Ferner kann das Datenkommunikationssystem eine Bedieneinheit aufweisen, die in einer Datenübertragungsverbindung mit der Zentraleinheit steht, und die eine Anzeigeeinheit und eine Eingabeeinheit enthält.

Weiterhin kann die Datenkommunikation in einem vorbestimmten Datenformat erfolgen, das im Wesentlichen von der Bedieneinrichtung und/oder der Zentraleinheit hardwareunabhängig ist.

Erfindungsgemäß kann die Kommunikation zwischen der Bedieneinrichtung und der Zentraleinheit über ein TCP/IP-Protokoll erfolgen.

Das TCP/IP-Protokoll (Transmission Control Protocol/Internet-Protokoll) bildet im Augenblick das zentrale Protokollpaar für die Übertragung von Daten zwischen verschiedenen Rechnern im Internet. Mit dem TCP/IP-Protokoll ist es möglich, eigenständige Netzwerke so miteinander zu verbinden, dass jeder Hostrechner eines Netzwerks mit allen anderen Rechnern des Netzwerks kommunizieren kann. Das vorliegende Protokoll hat den Vorteil, dass es unabhängig vom Übertragungsmedium ist, so dass prinzipiell beliebige Übertragungsarten möglich sind. Weiterhin ermöglicht es die Interoperabilität zwischen verschiedenen Systemen. Ein Vorteil dieses Datenübertragungsprotokolls besteht darin, daß es sehr robust gegenüber Verbindungsstörungen ist. In der vorliegenden Erfindung kann dieses Übertragungsprotokoll zur Steuerung des Prüfprogramms verwendet werden.

In einer Ausführungsform steht die Bedieneinrichtung drahtlos mit der Zentraleinheit in Verbindung. Hierdurch wird eine Mobilität erreicht, die bei einer Verbindung zwischen der Bedieneinrichtung und der Zentraleinheit über ein Kabel nicht möglich ist.

Weiterhin kann auf der Zentraleinheit ein Programm ablaufen, mit dem die von der Messeinrichtung erfassten Daten verarbeitet werden. In einer bevorzugten Ausführungsform ist das Programm ein Prüfprogramm für einen Prüfstand für Kraftfahrzeuge. Ist die Verbindung zwischen der Bedieneinrichtung und der Zentraleinheit drahtlos, so muss der Prüfer bei der Überprüfung des Fahrzeugs nicht mehr zwischen der feststehenden Bedieneinrichtung und dem Fahrzeug hin und her laufen, um beispielsweise Fahrzeugmängel in das Prüfprogramm einzugeben, oder um den Prüfstand zu bedienen. Der Prüfer kann hierbei die tragbare Bedieneinrichtung (handheld) mit sich führen, mit der er den Ablauf des Prüfprogramms steuern kann, und in die er direkt beim Fahrzeug die beobachteten Fehler eingeben kann.

Ebenso kann die Bedieneinheit eine Anzeigeeinheit aufweisen, auf der die durch das Programm verarbeiteten Messdaten angezeigt werden können. Die von der Messeinrichtung erfassten Messdaten werden über die Datenübertragungsverbindung auf die Bedieneinrichtung übertragen und auf der Anzeigeeinheit dargestellt.

Weiterhin kann die Bedieneinrichtung eine Eingabeeinheit aufweisen. Hierdurch kann der Prüfer durch die Eingabeeinheit Befehle in die Bedieneinrichtung eingeben und damit den Programmablauf des Prüfprogramms von der tragbaren Bedieneinrichtung (handheld) steuern.

Die Zentraleinheit kann weiterhin eine Sende-/Empfangseinrichtung zum Datenaustausch mit der Bedieneinrichtung aufweisen. Ebenso kann die Bedieneinrichtung eine Sende-/Empfangseinrichtung für den Datenaustausch mit der Zentraleinheit aufweisen. Mit diesen Sende-/Empfangseinrichtungen der Zentraleinheit und der Bedieneinheit werden jeweils die Daten übermittelt, die durch das TCP/IP-Protokoll zur Verfilgung gestellt wurden.

Weiterhin kann die Bedieneinrichtung die von der Zentraleinheit bereitgestellten Daten und/oder Graphiken unabhängig von der systemspezifischen Konfiguration der Zentraleinheit darstellen. Hierbei stellt die Bedieneinrichtung die Daten und/oder Graphiken der Zentraleinheit mit Hilfe von XML, HTML und/oder Java dar.

Im folgenden soll nun die Wirkungsweise des Datenkommunikationssystems beispielhaft erklärt werden. Das Prüfprogramm ist auf der Zentraleinheit abgespeichert und läuft auf dieser Zentraleinheit ab. Über sogenannte "links" in der HTML-Seite kann der Prüfer den Ablauf des Prüfprogramms steuern. Will der Prüfer beispielsweise bei einem Prüfungsschritt Mängelerfassung die einzelnen Mängel am Fahrzeug mit ihrer genauen Position eingeben, genügt eine einfache HTML-Seite, die durch die Zentraleinheit zur Verfügung gestellt wird, auf die Bedieneinrichtung übertragen wird und dort mit der Anzeigeeinheit dargestellt wird. Die Bedieneinrichtung benötigt hierfür keine eigene Intelligenz, ein HTML-Browser reicht somit aus.

Die Bedienung des Prüfprogramms erfolgt durch vom Prüfprogramm auf der Zentraleinheit erzeugten HTML-Seiten. Die HTML-Seiten werden zur tragbaren Bedieneinrichtung übertragen und dort von der Anzeigeeinheit dargestellt. Der Betreiber kann dabei durch verschiedene HTML-Seiten navigieren (surfen) und kann bei Bedarf in entsprechenden Feldern Einträge vornehmen.

Eine weitere Anwendungsmöglichkeit ist beispielsweise die aktive Steuerung des Prüfungsablaufes, wenn der Prüfer aktuelle Messdaten, die von der Messeinrichtung erfasst wurden, auf der Anzeigeeinheit anzeigen will. Für eine derartige Anwendung ist der Aufbau einer neuen HTML-Seite in einem sehr kurzen Zeitintervall δt notwendig, wenn im Zeitintervall δt jeweils neue Messdaten anfallen, die auf der Anzeigeeinheit dargestellt werden sollen. Ein mögliches Beispiel hierfür ist die Überprüfung eines Bremsvorgangs, bei dem im Verlauf der Fahrzeugbremsung die Bremskräfte an den Rädern einer Achse verglichen werden. Die Bedieneinrichtung wird ständig mit neuen Informationen versorgt, die angezeigt werden müssen. Hierfür kann beispielsweise die Programmiersprache Java verwendet werden, die einfach, objektorientiert und plattformunabhängig ist. Bei Internetanwendungen mit Java allgemein werden nicht lokal installierte, maschinenspezifische Softwareprogramme benötigt, sondern die Software wird in Form von Java-Applets bereitgestellt, die beispielsweise von der Zentraleinheit zur Bedieneinrichtung geladen werden können. Dadurch ist beispielsweise ein Software-Up-Date möglich, ohne daß das Handheld neu programmiert werden muß. Werden für den Aufbau einer HTML-Seite kompliziertere Graphiken benötigt und werden diese in einem kurzen Zeitintervall δt emeuert, so kann dies mit Java-Applets erfolgen, die in eine HTML-Seite eingebettet sind. Diese Java-Applets werden über die Datenübertragungsverbindung von der Zentraleinheit geladen, und diese Java-Applikation wird dann schließlich auf der Bedieneinrichtung ausgeführt. Es kann somit zur Darstellung beispielsweise einer Balkengraphik ausreichen, den darzustellenden Absolut- oder Relativwert zugeordnet zu einem Messwert und somit codiert zu übertragen, wobei das Applet dann aus der Zuordnung bzw. der Codierung den Balken erzeugt und darstellt. Durch diese Art der Datenkommunikation wird die übertragene Datenmenge stark reduziert. Soll beispielsweise ein Messwert in einem Balkendiagramm dargestellt werden, der sich zeitlich schnell ändert, so muss nicht zu jedem Zeitpunkt das gesamte Bild mit der Höhe des Balkens erzeugt und übertragen werden, sondern nur der Messwert, d.h. die Höhe des Balkens. Hierdurch wird die zu übertragende Datenmenge geringer, so dass auch sich zeitlich schnell ändernde Messwerte dargestellt werden können. Die vorliegende Erfindung ist selbstverständlich nicht auf Java-Anwendungen zur Darstellung komplizierterer HTML- oder XML-Seiten limitiert. Es sind ebenso andere Programmiersprachen denkbar, die die oben angegebenen Spezifikationen erfüllen.

Weiterhin kann die Bedieneinrichtung eine Einrichtung zur Spracherkennung aufweisen. Somit ist es möglich, dass Befehle für den Ablauf des Prüfprogramms vom Prüfer in ein hierfür vorhandenes Mikrofon gesprochen werden können. Die Sprachdaten können dann zur Zentraleinheit gesendet, dort ausgewertet und für die Steuerung des Prüfprogrammablaufs verwendet werden.

Bei einer derartigen Spracherkennung kann der Prüfer aus einer Vielzahl von Mängeln oder Befehlen frei auswählen. Je größer jedoch der Wortschatz desto schwieriger ist es für den Betreiber die richtigen Worte auswendig zu wissen und natürlich auch für das Spracherkennungssystem die richtigen Worte zu erkennen. Daher kann eine deutliche Verbesserung erfindungsgemäß dadurch erreicht werden, daß dem Prüfer eine Checkliste (z.B. 1 HTML-Seite) zur Auswahl vorgelegt wird.

Das Spracherkennungssystem muß dann nur unter diesen beispielsweise 10 Begriffen unterscheiden können. Anstatt der 10 Begriffe könnten auch Platzhalter zum Einsatz kommen, die dann für diese Begriffe ausgewählt werden könnten, beispielsweise bei einer Durchnummerierung die Zahlen von 1 bis 10 (Hotkeys). Dadurch wird die Spracherkennung weiter vereinfacht.

Das Spracherkennungsmodul (Software) kann dabei im Handheld installiert sein oder aber in der Zentraleinheit ablaufen. Je nachdem müssen nur die daraus resultierenden Kommandos oder aber die Sprache analog bzw. digital komprimiert übertragen werden.

Bei der Spracheingabe dient die dargestellte HTML-Seite als Checkliste. Es-werden nur die entsprechenden "Schlüsselwörter" von der Spracherkennung decodiert. Dadurch läßt sich eine entsprechend hohe "Trefferrate" erreichen.

Die Sprachübertragung kann dabei über die Haupthuikstrecke wie z.B. blue-tooth oder aber über ein separates Medium erfolgen.

Weiterhin können die von der Messeinrichtung erfassten Messdaten in einer auf der Zentraleinheit angeordneten Speichereinheit gespeichert werden.

Weiterhin kann die Zentraleinheit eine Steuereinheit aufweisen, welche die Datenübertragungsverbindung überwacht und/oder steuert.

Die Datenübertragungsverbindung kann beispielsweise mit Infrarot erfolgen. Ebenso kann sie auch mit Funk erfolgen. Eine weitere Möglichkeit der Datenübertragungsverbindung ist die Bluetooth-Technologie, bei der die Übertragung der Signale über ein Frequenzband bei 2,4 GHz erfolgt. Natürlich kann die Übertragung der Daten ebenso über ein Kabel erfolgen, falls eine drahtlose Übertragung der Daten zwischen der Zentraleinheit und der Bedieneinrichtung nicht wünschenswert ist.

Die Aufgabe der vorliegenden Erfindung wird weiter durch ein Verfahren zum Betreiben eines Datenkommunikationssystems gelöst. Die Messdaten können hierbei durch eine Messeinrichtung erfasst und anschließend durch eine Zentraleinheit verarbeitet werden.

In einem weiteren Schritt kann eine Datenübertragungsverbindung zwischen der Bedien- und der Zentraleinheit errichtet werden, wobei die Kommunikation zwischen der Bedieneinrichtung und der Zentraleinheit in einem vorbestimmten Datenformat erfolgen kann.

Dieses Datenformat kann im wesentlichen hardwareunabhängig sein.

Nachfolgend wird unter Bezugnahme auf die beiliegenden schematischen Zeichnungen die Erfindung beispielhaft erklärt. Es zeigen:
- Fig. 1: eine schematische Darstellung des erfindungsgemäßen Datenkommunikationssystems,
- Fig. 2: ein schematisches Ablaufdiagramm für den Programmstart der Zentraleinheit,
- Fig. 3: ein schematisches Ablaufdiagramm für den Start der Bedieneinrichtung,
- Fig. 4: ein schematisches Ablaufdiagramm eines Prüfschritts auf der Zentraleinheit,
- Fig. 5: ein schematisches Ablaufdiagramm für einen Prüfschritt auf der Bedieneinheit,
- Fig. 6: bis 8 verschiedene Darstellungsfenster des Prüfprogramms, die auf der Anzeigeeinrichtung dargestellt werden.

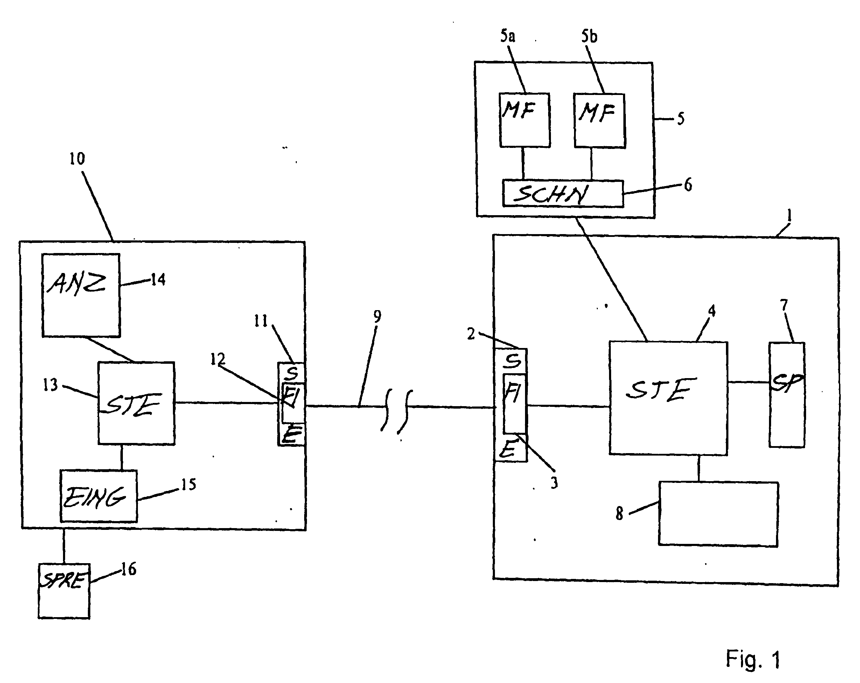

Wie in Fig. 1 dargestellt, weist eine Zentraleinheit 1 eine Sende-/Empfangseinheit 2 auf, mit der Daten gesendet und/oder empfangen werden können. Diese Daten durchlaufen ein in der Sende-/Empfangseinrichtung 2 vorgesehenes Frequenzfilter 3, wenn die Datenübertragung zu der Zentraleinheit 1 über elektromagnetische Wellen erfolgt. Erfolgt die Datenübertragung beispielsweise über Infrarot oder mit Hilfe eines Kabels, kann der Frequenzfilter 3 natürlich weggelassen werden. Die mit dem Frequenzfilter 3 gefilterten Daten werden an eine zentrale Steuereinheit 4 weitergegeben, die den Ablauf eines auf der Zentraleinheit 1 ablaufenden Prüfprogramms steuert. Weiterhin ist eine Messeinrichtung 5 vorgesehen, die aus mehreren Messfühlern 5a, 5b besteht. Von den Messfühlern 5a, 5b werden an einem (nicht gezeigten) Prüfstand Messdaten erfasst und nach einer Analog/Digital-Wandlung an eine Schnittstelle 6 übergeben. Die digitalen Messdaten werden an die zentrale Steuereinheit 4 übergeben und dort weiter verarbeitet. Das Prüfprogramm und die Messdaten können in einer Speichereinheit 7 gespeichert werden. Der Programmablauf kann auf einer Anzeigevorrichtung der Zentraleinheit 1 dargestellt werden. Die verarbeiteten Messdaten können nun über die Sende-/Empfangseinheit 2 über eine Datenübertragungsverbindung 9 an eine Bedieneinrichtung 10 übertragen werden. Die Bedieneinrichtung 10 weist eine Sende-/Empfangseinrichtung 11 auf, mit der die Daten empfangen werden können. Anschließend durchlaufen sie ein Frequenzfilter 12, bevor sie in eine Steuereinheit 13 der Bedieneinrichtung 10 eingegeben werden. Das Frequenzfilter 12 ist natürlich nur vorgesehen, wenn die Datenübertragung mit elektromagnetischen Wellen in einem bestimmten Frequenzbereich erfolgt. Die Bedieneinrichtung 10 weist weiterhin eine Anzeigeeinheit 14 und eine Eingabeeinheit 15 auf. Weiterhin kann eine Einrichtung zur Spracherkennung 16 vorhanden sein.

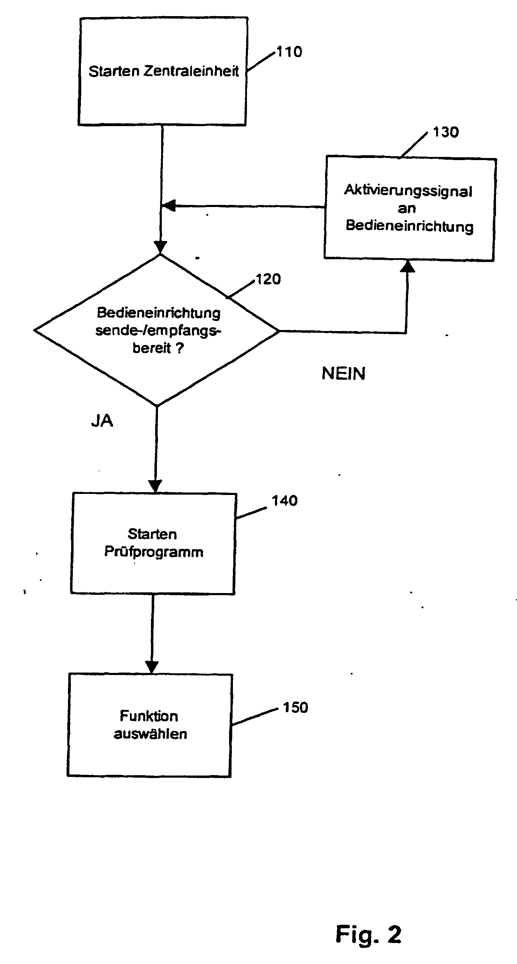

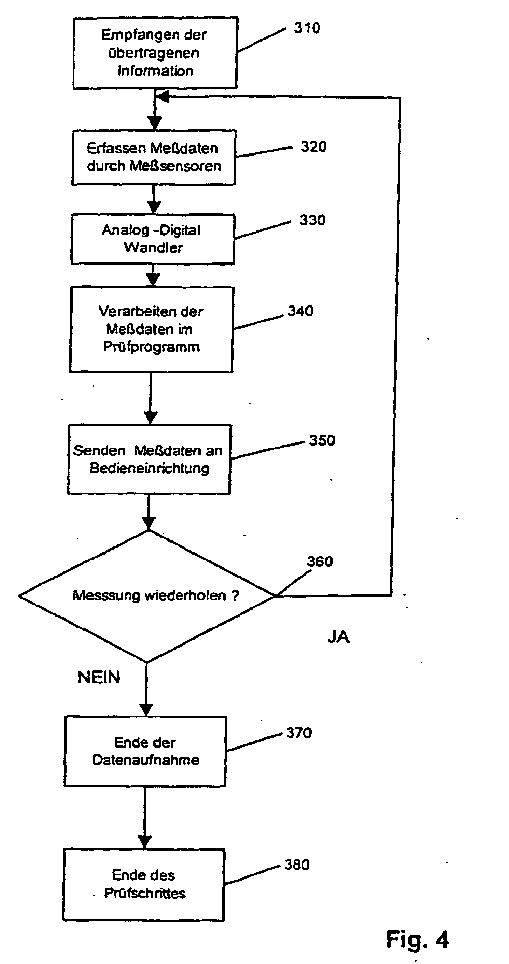

In Fig. 2 ist beispielhaft ein Ablaufdiagramm für den Systemstart der Zentraleinheit 1 dargestellt. In einem Schritt 110 wird die Zentraleinheit 1 gestartet. Im darauffolgenden Schritt 120 wird überprüft, ob die Bedieneinrichtung 10 sende- bzw. empfangsbereit ist. Ist dies nicht der Fall, wird in einem Schritt 130 ein Aktivierungssignal an die Bedieneinheit gesendet. Ist die Bedieneinrichtung sende- bzw. empfangsbereit, wird in einem Schritt 140 ein Prüfprogramm gestartet. In einem Schritt 150 wird eine spezielle Funktion aus dem Prüfprogramm ausgewählt, die anschließend durchgeführt wird, was genau genauer in Fig. 4 beschrieben wird.

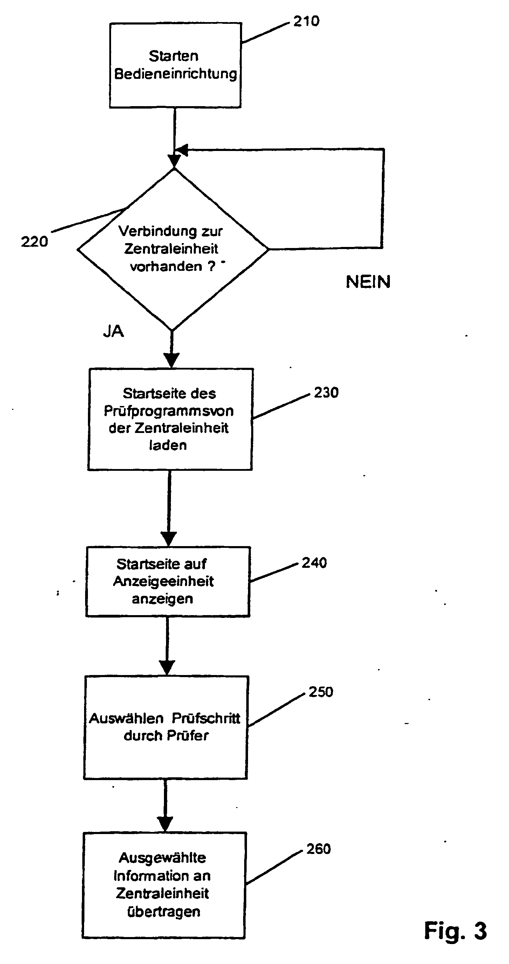

Wie in Fig. 3 dargestellt wird in einem Schritt 210 die Bedieneinrichtung gestartet. Hierbei wird in einem Schritt 220 überprüft, ob eine Verbindung der Bedieneinrichtung 10 zur Zentraleinheit 1 vorhanden ist. In einem Schritt 230 wird die beim Start des Prüfprogramms vorhandene Startseite von der Zentraleinheit geladen. In einem Schritt 240 kann anschließend die gewünschte Funktion des Prüfprogramms in der Anzeigeeinheit angezeigt werden. In einem Schritt 250 wird durch den Prüfer ein Prüfabschnitt ausgewählt. Anschließend wird in einem Schritt 260 diese Information an die Zentraleinheit übertragen.

Wie in Fig. 4 in Schritt 310 dargestellt, empfängt die Zentraleinheit 1 die von der Bedieneinrichtung 10 über den ausgewählten Prüfschritt übertragene Information. Im Schritt 320 werden die für den ausgewählten Prüfschritt gewonnenen Messdaten durch die Messeinrichtung 5 der Zentraleinheit 1 erfasst. Anschließend erfolgt in einem Schritt 330 eine Analog/Digital-Wandlung der erfolgten Messdaten. Diese werden anschließend im Schritt 340 im Prüfprogramm verarbeitet und in einem Schritt 350 an die Bedieneinrichtung 10 übertragen. Die Messdaten können entweder in Form von HTML-Seiten oder in einem vorbestimmten Format übertragen werden, das von der Bedieneinrichtung 10 interpretiert werden kann. In einem Schritt 360 wird abgefragt, ob weiterhin Messdaten durch die Messeinrichtung 5 erfasst werden sollen. Ist dies der Fall erfolgt wieder Schritt 320 mit der Erfassung der Messdaten. Ist dies nicht der Fall, wird in einem Schritt 370 die Messdatenaufnahme gestoppt, so dass im Schritt 380 ein Prüfschritt beendet ist.

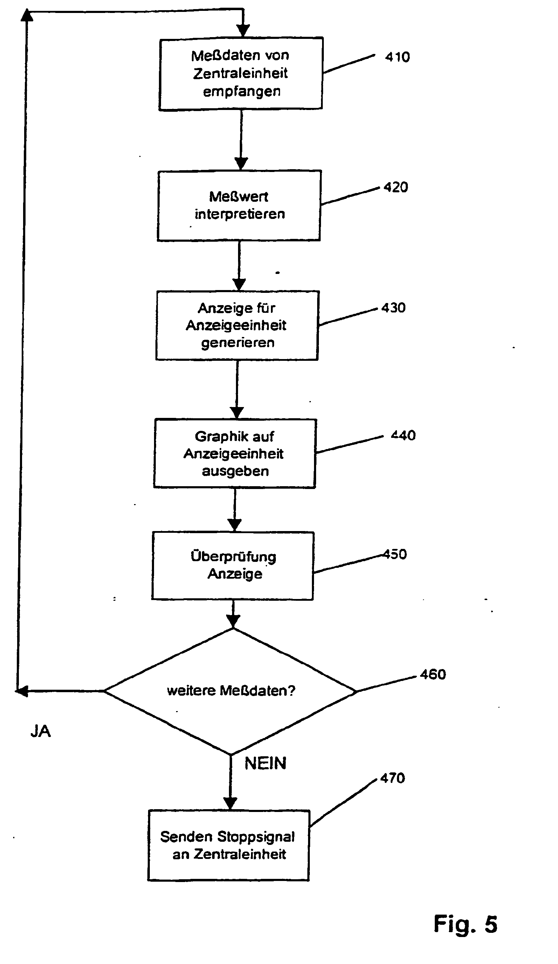

In Fig. 5 ist der Ablauf eines Prüfschritts beispielhaft für die Bedieneinrichtung dargestellt. Die in Schritt 350 von der Zentraleinheit versendeten Messdaten werden in einem Schritt 410 von der Bedieneinheit empfangen. Anschließend werden die Messdaten in einem Schritt 420 in der Bedieneinrichtung interpretiert und im nächsten Schritt 430 wird eine Anzeige generiert, die im Schritt 440 auf der Anzeigeeinheit ausgegeben wird. In einem Schritt 450 kann beispielsweise der Prüfer die Anzeige mit den Messwerten überprüfen und anschließend in einem weiteren Schritt 460 festlegen, ob weitere Messdaten aufgenommen werden sollen. Ist dies der Fall, werden im Schritt 410 weiter Messdaten von der Zentraleinheit empfangen. Ist dies nicht der Fall wird in einem Schritt 470 der Befehl an die Zentraleinheit geschickt, die Datenaufnahme zu beenden.

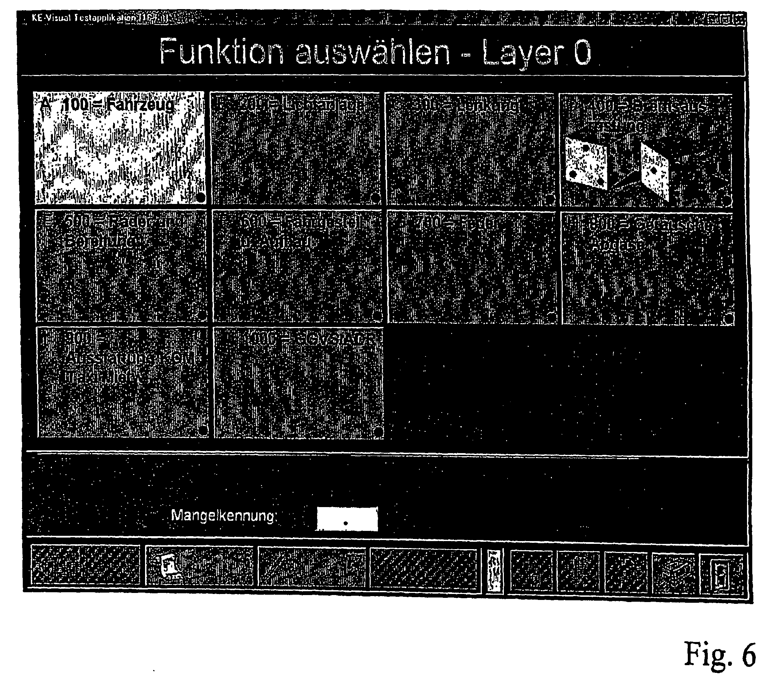

In Fig. 6 ist ein Beispiel für eine Anzeige dargestellt, wie sie nach dem Starten des Prüfprogrammes auf der Anzeigeeinheit der Bedieneinrichtung dargestellt werden kann. Auf dieser Startseite des Prüfprogramms kann beispielsweise aus verschiedenen Prüfmöglichkeiten ausgewählt werden.

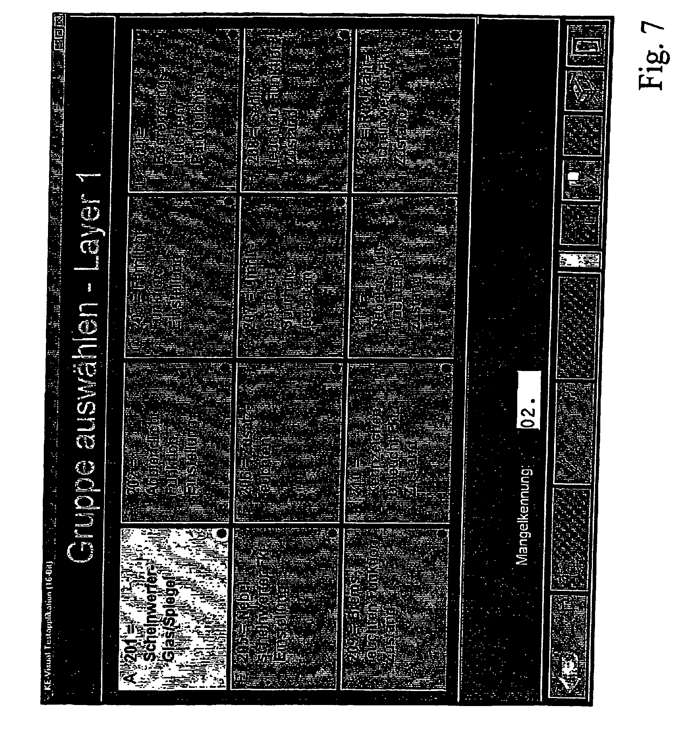

In Fig. 7 ist ein Bild mit dem Prüfungsablauf für die Erkennung von Mängeln am Fahrzeug dargestellt, das auf der Anzeigeeinheit 14 der Bedieneinrichtung 10 dargestellt werden kann. Der Prüfer untersucht das Fahrzeug und gibt die gefundenen Mängel gleich beim Auffinden in die Eingabeeinheit der tragbaren Bedieneinrichtung 10 ein, wobei er beispielsweise die genaue Position des Mangels am Fahrzeug sowie die Schwere des Mangels angeben kann. Für ein derartiges Anwendungsbeispiel ist nur eine einfache HTLM-Seite notwendig, die Verwendung von Java ist nicht notwendig, da schnell abfolgende Bilder nicht geladen werden müssen. Hat der Prüfer einen Mangel genau spezifiziert, so schickt er die ausgefüllte Seite zurück an die Zentraleinheit und kann mit der Prüfung fortfahren, z.B. durch Senden der nächsten entsprechenden HTML-Seite oder durch einen "Eintrag" in die entsprechende Mängeldatei.

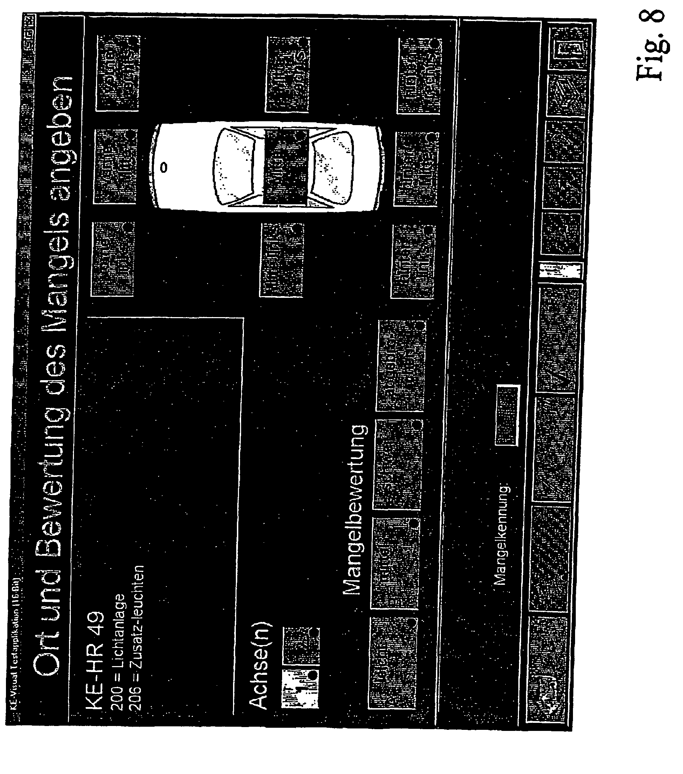

In Fig. 8 ist ein Beispiel einer Anzeige eines Prüfprogramms abgebildet, bei der die Anwendung eines Java-Programms sinnvoll erscheint. Hier sind beispielhaft die auf den beiden Rädern einer Achse anfallenden Bremskräfte in Form von Balkendiagrammen sowie deren Unterschiede dargestellt. Während eines Bremsvorgangs ändern sich diese Bilder sehr häufig, so dass für die Darstellung dieser Daten eine hohe Bandbreite erforderlich wäre. Daher kann beispielsweise lediglich der darzustellende Bremswert als ein von der Bedieneinheit durch ein schon vorhandenes Java-Applet interpretierbarer Einzelwert übertragen werden, wobei das Java-Applet dann die graphische Auswertung und Darstellung übernimmt. Das Java-Programm kann beispielsweise nur die Informationen enthalten, wie groß bzw. wie hoch der jeweilige Messbalken ist.

Die oben gezeigten Beispiele der Anzeigen sind nur beispielhaft zu verstehen und hängen von der Größe der Anzeigeeinheit der verwendeten Bedieneinrichtung ab. Die Darstellung sollte naturgemäß so erfolgen, dass ein Scrolling des Bildschirms nicht notwendig ist. Hierfür sollte die Auflösung der Anzeigeeinheit der Bedieneinrichtung abfragbar sein. Ebensogut können relative Koordinaten zur Darstellung verwendet werden.

Mit der vorliegenden Erfindung wird somit ein bedienerfreundliches systemunabhängiges Datenkommunikationssystem bereitgestellt, mit dem der Prüfer unabhängig vom Übertragungsmedium mit einer sehr robusten Datenübertragungsverbindung Daten zwischen einer Bedieneinrichtung und einer Zentraleinheit übertragen. Selbstverständlich ist die vorliegende Erfindung nicht auf das vorliegende TCP/IP-Protokoll beschränkt. Es sind auch andere vom Übertragungsmedium unabhängige Übertragungsarten möglich. Sollte sich in Zukunft ein anderes Übertragungsprotokoll durchsetzen, so kann die erfindungsgemäße Lehre selbstverständlich auch mit diesem anderen, beispielsweise weiter entwickelten Protokoll durchgeführt werden.

## Patentansprüche

1. Datenkommunikationssystem für Prüfstände zum Prüfen von Kraftfahrzeugen, mit
- zumindest einer Messeinrichtung (5) zur Erfassung von Messdaten,
- einer Zentraleinheit (1), die die von der Messeinrichtung erfassten Daten empfängt und verarbeitet und
- einer Bedieneinrichtung (10), die in einer Datenübertragungsverbindung (9) mit der Zentraleinheit (1) steht und eine Anzeigeeinheit (14) und eine Eingabeeinheit (15) enthält,
**dadurch gekennzeichnet, dass**
die Datenkommunikation in einem vorbestimmten Datenformat erfolgt, das im Wesentlichen von der Bedierieinrichtung (10) und/oder der Zentraleinheit (1) hardwareunabhängig ist, wobei
die Anzeigeeinheit (14) die durch ein auf der Zentraleinheit (1) laufendes Prüfprogramm verarbeiteten Messdaten und/oder Messergebnisse anzeigt und über die Eingabeeinheit (15) der Bedieneinrichtung (10) der Ablauf des Prüfprogramms auf der Zentraleinheit (1) steuerbar ist.

2. Datenkommunikationssystem nach Anspruch 1, **dadurch gekennzeichnet, dass** die Datenkommunikation zwischen der Bedieneinrichtung (10) und der Zentraleinheit (1) zumindest über eine Teilstrecke drahtlos erfolgt.

3. Datenkommunikationssystem nach einem der Ansprüche 1 oder 2, **dadurch gekennzeichnet, dass** die Zentraleinheit (1) eine Sende-/Empfangseinrichtung (2) zum Datenaustausch mit der Bedieneinrichtung (10) aufweist.

4. Datenkommunikationssystem nach zumindest einem der Ansprüche 1 bis 3, **dadurch gekennzeichnet, dass** die Bedieneinrichtung (10) eine Sende-/Empfangseinrichtung (11) zum Datenaustausch mit der Zentraleinheit (1) aufweist.

5. Datenkommunikationssystem nach zumindest einem der Ansprüche 1 bis 4, **dadurch gekennzeichnet, dass** die Bedieneinrichtung (10) die von der Zentraleinheit (1) bereitgestellten Daten und/ oder Graphiken unabhängig von der systemspezifischen Konfiguration der Zentraleinheit (1) darstellt.

6. Datenkommunikationssystem nach zumindest einem der Ansprüche 1 bis 5, **dadurch gekennzeichnet, dass** die Bedieneinrichtung (10) die Daten und/oder Graphiken als HTML-Seiten und/oder über eine Interpretation durch ein Java-Applet darstellt.

7. Datenkommunikationssystem nach zumindest einem der Ansprüche 1 bis 6, **dadurch gekennzeichnet, dass** die von dem Programm erzeugten Ausgaben auf der Bedieneinrichtung (10) dargestellt werden.

8. Datenkommunikationssystem nach zumindest einem der Ansprüche 1 bis 7, **dadurch gekennzeichnet, dass** die Bedieneinrichtung (10) eine Eingabeeinheit (15) aufweist.

9. Datenkommunikationssystem nach zumindest einem der Ansprüche 1 bis 8, **dadurch gekennzeichnet, dass** die Bedieneinrichtung (10) eine Einrichtung zur Spracherkennung (16) aufweist.

10. Datenkommunikationssystem nach zumindest einem der Ansprüche 1 bis 9, **dadurch gekennzeichnet, daß** ein Spracherfassungsmodul vorgesehen ist, die zu erkennenden Sprachbefehle auf eine an der Anzeigeneinheit (14) dargestellte Auswahl beschränkt ist und/oder eine Übertragung der Sprache gemeinsam mit HTML-Befehlen oder auf einem separaten Medium erfolgt.

11. Datenkommunikationssystem nach zumindest einem der Ansprüche 1 bis 10, **dadurch gekennzeichnet, dass** die Bedieneinrichtung (10) den Ablauf des Programms auf der Zentraleinheit (1) steuert.

12. Datenkommunikationssystem nach zumindest einem der Ansprüche 1 bis 11, **dadurch gekennzeichnet, dass** die von der Messeinrichtung (5) erfassten Messdaten in einer auf der Zentraleinheit (1) angeordneten Speichereinheit (7) gespeichert werden.

13. Datenkommunikationssystem nach zumindest einem der Ansprüche 1 bis 12, **dadurch gekennzeichnet, dass** die Zentraleinheit (1) eine Steuereinheit (4) aufweist, die die Datenübertragungsverbindung (9) überwacht und/oder steuert.

14. Datenkommunikationssystem nach zumindest einem der Ansprüche 1 bis 13, **dadurch gekennzeichnet, dass** es zum Betreiben eines Kraftfahrzeugprüfstands verwendet wird.

15. Datenkommunikationssystem nach zumindest einem der Ansprüche 1 bis 14, **dadurch gekennzeichnet, dass** die Datenübertragungsverbindung (9) mit Infrarot erfolgt.

16. Datenkommunikationssystem nach zumindest einem der Ansprüche 1 bis 14, **dadurch gekennzeichnet, dass** die Datenübertragungsverbindung (9) über Funk erfolgt.

17. Datenkommunikationssystem nach zumindest einem der Ansprüche 1 bis 14, **dadurch gekennzeichnet, dass** die Datenübertragungsverbindung (9) mittels der Bluetooth-Technologie oder DECT erfolgt.

18. Datenkommunikationssystem nach zumindest einem der Ansprüche 1 bis 17, **dadurch gekennzeichnet, dass** die Datenkommunikation über ein TCP/IP-Protokoll erfolgt.

19. Verfahren zum Betreiben eines Datenkommunikationssystems für Prüfstände zum Prüfen eines Kraftfahrzeugs mit den folgenden Schritten:
- Erfassen von Messdaten durch eine Messeinrichtung (5),
- Verarbeiten der durch die Messeinrichtung (5) erfassten Daten durch eine Zentraleinheit (1),
- Errichten einer Datenübertragungsverbindung (9) zwischen einer Bedieneinrichtung (10) und der Zentraleinheit (1), wobei die Kommunikation zwischen der Bedieneinrichtung (10) und der Zentraleinheit (1) in einem vorbestimmten Datenformat erfolgt, das im wesentlichen von der Bedieneinheit (10) und/oder der Zentraleinheit (1) hardwareunabhängig ist, wobei
eine Anzeigeeinheit (14) der Bedieneinrichtung (10) die durch ein auf der Zentraleinheit (1) laufendes Prüfprogramm verarbeiteten Messdaten und/oder Messergebnisse anzeigt und über eine Eingabeeinheit (15) der Bedieneinrichtung (10) der Ablauf des Prüfprogramms auf der Zentraleinheit (1) steuerbar ist.

## Claims

1. A data communication system for test benches for testing motor vehicles, comprising
- at least one measuring device (5) for detecting measurement data,
- a central processing unit (1) for receiving and processing said data detected by said measuring device, and
- an control device (10) connected to said central processing unit (1) via a data communication link (9) and including a display unit (14) and an input unit (15),
**characterized in that**
said data communication is performed in a predetermined data format which is substantially hardware-independent of said control device (10) and/or of said central processing unit (1), wherein said display unit (14) displays said measurement data processed by a test program running on said central processing unit (1) and/or measuring results and that the execution of said test program in said central processing unit (1) can be controlled via said input unit (15) of said control device (10).

2. The data communication system according to claim 1, **characterized in that** said data communication between said control device (10) and said central processing unit (1) is a wireless communication at least on a partial length.

3. The data communication system according to one of the claims 1 or 2, **characterized in that** said central processing unit (1) comprises a transmission/receiving device (2) for communicating data with said control device (10).

4. The data communication system according to at least one of the claims 1 to 3, **characterized in that** said control device (10) comprises a transmission/receiving device (11) for exchanging data with said central processing unit (1).

5. The data communication system according to at least one of the claims 1 to 4, **characterized in that** said control device (10) represents data and/or graphics provided by said central processing unit (1) independently from the system-specific configuration of said central processing unit (1).

6. The data communication system according to at least one of the claims 1 to 5, **characterized in that** said control device (10) represents data and/or graphics as HTML pages and/or by means of an interpretation by a java-applet.

7. The data communication system according to at least one of the claims 1 to 6, **characterized in that** the outputs generated by said program are represented on said control device (10).

8. The data communication system according to at least one of the claims 1 to 7, **characterized in that** said control device (10) comprises an input unit (15).

9. The data communication system according to at least one of the claims 1 to 8, **characterized in that** said control device (10) comprises a speech recognition device (10).

10. The data communication system according to at least one of the claims 1 to 9, **characterized in that** a speech detection module is provided, the speech commands to be recognized are limited to a selection represented on said display unit (14) and/or the transfer of speech is performed together with HTML commands or on a separate medium.

11. The data communication system according to at least one of the claims 1 to 10, **characterized in that** said control device (10) controls the execution of said program in said central processing unit (1).

12. The data communication system according to at least one of the claims 1 to 11, **characterized in that** said measurement data detected by said measuring device (5) are stored in a memory unit (7) arranged in said central processing unit (1).

13. The data communication system according to at least one of the claims 1 to 12, **characterized in that** said central processing unit (1) comprises a control unit (4) which monitors and/or controls said data communication link (9).

14. The data communication system according to at least one of the claims 1 to 13, **characterized in that** it is used for operating a test bench for motor vehicles.

15. The data communication system according to at least one of the claims 1 to 14, **characterized in that** said data communication link (9) is performed by means of infrared light.

16. The data communication system according to at least one of the claims 1 to 14, **characterized in that** said data communication link (9) is performed by means of radio communication.

17. The data communication system according to at least one of the claims 1 to 14, **characterized in that** said data communication link (9) is performed by means of Bluetooth technology or DECT.

18. The data communication system according to at least one of the claims 1 to 17, **characterized in that** said data communication is performed by means of a TCP/IP protocol.

19. A method for operating a data communication system for test benches for testing motor vehicles, comprising the following steps:
- detecting measurement data by a measuring device (5),
- processing said data detected by said measuring device (5) by means of a central processing unit (1),
- establishing a data communication link (9) between a control device (10) and said central processing unit (1), wherein said communication between said control device (10) and said central processing unit (1) is performed in a predetermined data format which is substantially hardware-independent of said control device (10) and/or of said central processing unit (1), wherein
a display unit (14) of said control device (10) displays said measurement data processed by a test program running on said central processing unit (1) and/or measuring results and the execution of said test program in said central processing unit (1) can be controlled via an input unit (15) of said control device (10).

## Revendications

1. Système de communication de données pour bancs d'essai en vue de tester les véhicules automobiles, avec
- au moins un dispositif de mesure (5) pour enregistrer les données de mesure,
- une unité centrale (1) qui reçoit et traite les données enregistrées par le dispositif de mesure et
- un dispositif de commande (10) qui est en liaison de données (9) avec l'unité centrale (1) et comprend une unité d'affichage (14) et une unité d'entrée (15),
**caractérisé en ce que**
la communication de données se fait dans un format de données prédéfini, lequel du point de vue matériel informatique est essentiellement indépendant du dispositif de commande (10) et/ou de l'unité centrale (1), l'unité d'affichage (14) affichant les données de mesure et/ou les résultats de mesure traités par un programme de contrôle tournant sur l'unité centrale (1) et le déroulement du programme de contrôle sur l'unité centrale (1) pouvant être commandé par le biais de l'unité d'entrée (15) du dispositif de commande (10).

2. Système de communication de données selon la revendication 1, **caractérisé en ce que** la communication de données s'effectue sans fil au moins via une section de ligne entre le dispositif de commande (10) et l'unité centrale (1).

3. Système de communication de données selon une des revendications 1 ou 2, **caractérisé en ce que** l'unité centrale (1) comporte un dispositif d'émission/de réception (2) pour l'échange de données avec le dispositif de commande (10).

4. Système de communication de données selon au moins une des revendications 1 à 3, **caractérisé en ce que** le dispositif de commande (10) comporte un dispositif d'émission/de réception (11) pour l'échange de données avec l'unité centrale (1).

5. Système de communication de données selon au moins une des revendications 1 à 4, **caractérisé en ce que** le dispositif de commande (10) représente les données et/ou graphiques préparés par l'unité centrale (1) indépendamment de la configuration spécifique au système de l'unité centrale (1).

6. Système de communication de données selon au moins une des revendications 1 à 5, **caractérisé en ce que** le dispositif de commande (10) représente les données et/ou graphiques comme pages HTML et/ou par le biais d'une interprétation par un applet Java.

7. Système de communication de données selon au moins une des revendications 1 à 6, **caractérisé en ce que** les sorties générées par le programme sont représentées sur le dispositif de commande (10).

8. Système de communication de données selon au moins une des revendications 1 à 7, **caractérisé en ce que** le dispositif de commande (10) comporte une unité d'entrée (15).

9. Système de communication de données selon au moins une des revendications 1 à 8, **caractérisé en ce que** le dispositif de commande (10) comporte un dispositif de reconnaissance vocale (16).

10. Système de communication de données selon au moins une des revendications 1 à 9, **caractérisé en ce qu'**un module d'enregistrement vocal est prévu, les instructions vocales à identifier étant limitées à une sélection représentée sur l'unité d'affichage (14) et/ou une transmission vocale s'opérant conjointement avec des instructions HTML ou sur un support séparé.

11. Système de communication de données selon au moins une des revendications 1 à 10, **caractérisé en ce que** le dispositif de commande (10) commande le déroulement du programme sur l'unité centrale (1).

12. Système de communication de données selon au moins une des revendications 1 à 11, **caractérisé en ce que** les données de mesure enregistrées par le dispositif de mesure (5) sont mémorisées dans une unité de mémoire (7) disposée sur l'unité centrale (1).

13. Système de communication de données selon au moins une des revendications 1 à 12, **caractérisé en ce que** l'unité centrale (1) comporte une unité de contrôle (4) qui surveille et/ou commande la liaison de données (9).

14. Système de communication de données selon au moins une des revendications 1 à 13, **caractérisé en ce qu'**il est utilisé pour exploiter un banc d'essai de véhicule automobile.

15. Système de communication de données selon au moins une des revendications 1 à 14, **caractérisé en ce que** la liaison de données (9) s'effectue par infrarouge.

16. Système de communication de données selon au moins une des revendications 1 à 14, **caractérisé en ce que** la liaison de données (9) s'effectue par radio.

17. Système de communication de données selon au moins une des revendications 1 à 14, **caractérisé en ce que** la liaison de données (9) s'effectue au moyen de la technologie Bluetooth ou DECT.

18. Système de communication de données selon au moins une des revendications 1 à 17, **caractérisé en ce que** la liaison de données se fait par l'intermédiaire d'un protocole TCP/IP.

19. Procédé pour exploiter un système de communication de données pour bancs d'essai en vue de tester un véhicule avec les étapes suivantes:
- enregistrement des données de mesure par un dispositif de mesure (5),
- traitement des données enregistrées par le dispositif de mesure (5) par une unité centrale (1),
- établissement d'une liaison de données (9) entre un dispositif de commande (10) et l'unité centrale (1), la communication entre le dispositif de commande (10) et l'unité centrale (1) s'effectuant dans un format prédéfini de données, lequel du point de vue matériel informatique est essentiellement indépendant du dispositif de commande (10) et/ou de l'unité centrale (1), une unité d'affichage (14) du dispositif de commande (10) affichant les données de mesure et/ou résultats de mesure traités par un programme de contrôle tournant sur l'unité centrale (1) et le déroulement du programme de contrôle sur l'unité centrale (1) pouvant être commandé par le biais d'une unité d'entrée (15) du dispositif de commande (10).
